# EUROPEAN PATENT APPLICATION

(11) **EP 2 554 320 A1**
(43) Date of publication of application: **06.02.2013**
(21) Application number: 11765549.8
(22) Date of filing: 29.03.2011
(51) Int. Cl.: B23K 11/14, B21D 22/02, B21J 5/06, B23K 11/11

(54) **RESISTANCE WELDED STRUCTURE, RESISTANCE WELDING METHOD, WELDED MEMBER AND MANUFACTURING METHOD THEREOF**

(30) Priority: 01.04.2010 JP 2010085283
(71) Applicant: Hitachi Automotive Systems, Ltd., Hitachinaka-shi Ibaraki 312-8503 (JP)
(72) Inventor: ONOSE Shin, Hitachinaka-shi Ibaraki 312-8503 (JP); NAKATANI Shinya, Hitachinaka-shi Ibaraki 312-8503 (JP); YUKITA Hisashi, Hitachinaka-shi Ibaraki 312-8503 (JP)
(74) Representative: MERH-IP Matias Erny Reichl Hoffmann
(86) International application number: PCT/JP2011/057804
(87) International publication number: WO 2011/125649

(57) **Abstract**

[Problem]

Provided are a resistance welding structure and a resistance welding method which can form a highly reliable welded part by applying a proper pressurizing force and a proper heat value to a joining portion. Also provided are a member to be welded which is suitable for carrying out these resistance welding structure and resistance welding method, and a method of manufacturing the member to be welded.

[Means for Resolution]

A member to be welded 1A is constituted as follows. A recessed portion 2 is formed on one surface of a raw material 1 formed of a metal plate, and a projection is formed on a bottom surface or a back surface of the recessed portion 2. Assuming a plate thickness of the raw material 1 in the inside of the recessed portion 2 and around the periphery of the projection 3 as D2 and a plate thickness of the raw material 1 outside the recessed portion 2 as D3, the plate thicknesses of the respective portions have the relationship of D2<D3.

## Description

### Technical Field

The present invention relates to the resistance welding structure, the resistance welding method which use projection welding, the constitution of a member to be welded on which a projection is formed and a manufacturing method thereof, and more particularly to the constitution of a projection forming portion in the resistance welding structure and a member to be welded.

### Background Art

Resistance welding is a welding method where a member to be welded is locally heated by resistance heat generation, and a heated portion is joined under an action of a pressurizing force. As one kind of the resistance welding method, there has been known so-called projection welding where a projection is formed on one of a plurality of members to be welded which are joined to each other, a pressurizing force and an electric current are applied between the respective members to be welded in a state where the projection is made to abut on the other member to be welded, and the respective members to be welded are joined to each other by focusing the pressurizing force and the electric current to the abutting portion between the projection and the other member to be welded. The projection welding can focus the pressurizing force and the electric current on a small area and hence, the excellent thermal balance can be acquired so that various products having excellent joining quality can be manufactured.

Conventionally, as a method of forming a projection on a member to be welded, there has been usually used a method where a dotted or linear pressurizing force is applied from a back surface side of the member to be welded so that a dotted or linear projection is extruded on a surface side of the member to be welded. According to this method, an indentation is formed on a back surface side of the member to be welded by pressurizing so that a wall thickness of the projection becomes smaller than a thickness of a raw material. Further, recently, there has been also proposed a technique which performs projection welding using a member to be welded which forms a dotted or linear projection on a surface side thereof without forming indentation on a back surface side of the member to be welded (see patent literature 1, for example).

### Citation List

### Patent Literature

PTL 1: JP-A-2005-259920

### Summary of Invention

### Technical Problem

Out of the members to be welded to which the conventional projection welding is applied, in the member to be welded where a pressurizing force is applied from a back surface side and projection is extruded on a surface side, as described previously, a wall thickness of the projection becomes smaller than a wall thickness of the raw material and hence, the projection has low rigidity so that the projection is deformed by a pressurizing force at the time of performing resistance welding. Further, since the thickness of the projection is decreased, the electric resistance at the time of performing resistance welding is increased due to the decrease of an energizing path whereby portions other than a contact portion with a counterpart member also generate heat and are softened. Accordingly, the projection is liable to cause buckling at the time of performing resistance welding so that a proper pressurizing force is not applied to a joining portion whereby a welding defect such as sputtering or a void is liable to occur in the joining portion thus giving rise to a drawback that it is difficult to acquire stable joining property.

On the other hand, when the member to be welded disclosed in patent document 1 is used, the projection has high rigidity so that the occurrence of a welding defect caused by buckling of the projection can be eliminated. However, also with respect to this member to be welded, in the same manner as the conventional member to be welded where the projection is extruded from the back surface side of the raw material, a total thickness of the member to be welded in a projection forming portion becomes a total value of a thickness of the raw material and a height of the projection whereby a resistance value between resistance welding electrodes is high. Accordingly, it is difficult to eliminate a drawback that the heat generation in a peripheral portion of the projection is large so that a heat affected zone extends in a wide range or the deformation of the projection becomes excessively large.

The present invention has been made to overcome such drawbacks of the related art, and it is an object of the present invention to provide the resistance welding structure and a resistance welding method which can form a highly reliable welded part by applying a proper pressurizing force and a proper heat value to a joining portion, and it is also an object of the present invention to provide a member to be welded which is suitable for carrying out these resistance welding structure and resistance welding method, and a method of manufacturing the member to be welded.

### Solution to Problem

According to the present invention, to achieve the above-mentioned objects, in a member to be welded where one or a plurality of projections are formed on a raw material formed of a metal plate, a recessed portion is formed on one surface of the raw material, the projection is formed on a bottom surface or a back surface of the recessed portion, and assuming a plate thickness of the raw material in the inside of the recessed portion and around the periphery of the projection as D2 and a plate thickness of the raw material outside the recessed portion as D3, the plate thicknesses of the respective portions have the relationship of D2<D3.

Further, according to the present invention, to achieve the above-mentioned objects, in a method of manufacturing a member to be welded, wherein using a press apparatus which includes; a pair of molds which are arranged on a front surface side and a back surface side of a raw material formed of a metal plate and fix the raw material thereto; a forming punch which locally applies a pressurizing force to the raw material; and a forming hole through which a portion of the raw material which generates the plastic flow by receiving the pressurizing force applied by the forming punch is made to flow, the raw material is fixed by the pair of molds and, thereafter, a predetermined pressurizing force is applied to one surface of the raw material by driving the forming punch thus forming a recessed portion corresponding to a shape of a distal end portion of the forming punch on a pressurizing force applied portion of the raw material, a portion of the raw material which generates the plastic flow by receiving the pressurizing force is made to flow through the forming hole whereby a projection having a predetermined shape and a predetermined size is formed, and assuming a plate thickness of the raw material in the inside of the recessed portion and around the periphery of the projection as D2 and a plate sickness of the raw material outside the recessed portion as D3, the plate thicknesses of the respective portions have the relationship of D2<D3.

Further, according to the present invention, to achieve the above-mentioned objects, in the resistance welding structure where a plurality of members to be welded which include at least one member to be welded on which a projection is formed are formed into an integral body by projection welding, the member to be welded on which the projection is formed is a member to be welded where one or a plurality of projections are formed on a raw material formed of a metal plate, a recessed portion is formed on one surface of the raw material, the projection is formed on a bottom surface or a back surface of the recessed portion, assuming a plate thickness of the raw material in the inside of the recessed portion and around the periphery of the projection as D2 and a plate thickness of the raw material outside the recessed portion as D3, the plate thicknesses of the respective portions have the relationship of D2<D3, and the member to be welded on which the projection is formed and the other member to be welded which is joined to the member to be welded are joined to each other via the projection.

Further, according to the present invention, to achieve the above-mentioned objects, in a resistance welding method where a plurality of members to be welded which include at least one member to be welded on which a projection is formed are formed into an integral body by projection welding, as the member to be welded on which the projection is formed, the member to be welded where a recessed portion is formed on one surface of a raw material which is formed of a metal plate, the projection is formed on a bottom surface or a back surface of the recessed portion, and assuming a plate thickness of the raw material in the inside of the recessed portion and around the periphery of the projection as D2 and a plate thickness of the raw material outside the recessed portion as D3, the plate thicknesses of the respective portions have the relationship of D2<D3 is used, and the plurality of members to be welded are made to overlap with each other with the projection arranged inside and, thereafter, electricity is supplied between the plurality of members to be welded via the projection, and a pressurizing force is applied to the projection.

### Advantageous Effects of Invention

According to the present invention, as the member to be welded on which the projection is formed which is applied for carrying out the resistance welding structure and the resistance welding method, the member to be welded where the recessed portion is formed on one surface of the raw material which is formed of a metal plate, the projection is formed on the bottom surface or a back surface of the recessed portion, and assuming a plate thickness of the raw material in the inside of the recessed portion and around the periphery of the projection as D2 and a plate thickness of the raw material outside the recessed portion as D3, the plate thicknesses of the respective portions have the relationship of D2<D3 is used. Accordingly, a portion having a wall thickness smaller than the plate thickness D2 of the raw material in the inside of the recessed portion and around the periphery of the projection is not formed in the projection so that the buckling of the projection at the time of performing resistance welding can be prevented whereby the stable joining quality is acquired. Further, the recessed portion is formed on one surface of the raw material and hence, a shape effect can be suppressed and a length of an energization path can be shortened at the time of performing resistance welding so that the intrinsic resistance between electrodes can be suppressed whereby the reduction of a heat affected zone can be realized. Further, with respect to the method of manufacturing a member to be welded, the desired recessed portion and the desired projection are simultaneously formed by making use of the plastic flow of the raw material and hence, the member to be welded can be manufactured with high efficiency.

### Brief Description of Drawings

[Fig. 1] Fig. 1 is a cross-sectional view showing an essential part of a member to be welded according to a first embodiment.
[Fig. 2] Fig. 2 is a cross-sectional view showing an essential part of a member to be welded according to a second embodiment.
[Fig. 3] Fig. 3 is a cross-sectional view showing an essential part of a member to be welded according to a third embodiment.
[Fig. 4] Fig. 4 is an explanatory view showing the constitution of a press apparatus which is used for manufacturing the member to be welded according to the first embodiment and a method of manufacturing the member to be welded according to the first embodiment which uses the press apparatus.
[Fig. 5] Fig. 5 is an explanatory view showing the constitution of a press apparatus used for manufacturing the members to be welded according to the second embodiment and the third embodiment and a method of manufacturing the members to be welded according to the second embodiment and the third embodiment which uses the press apparatus.
[Fig. 6] Fig. 6 is a constitutional view of various members to be welded manufactured by the manufacturing method according to the present invention.
[Fig. 7] Fig. 7 is an explanatory view of a member to be welded which is formed into a ribbon shape.
[Fig. 8] Fig. 8 is a constitutional view of a resistance welder which is used for carrying out a resistance welding method according to the present invention.
[Fig. 9] Fig. 9 is a cross-sectional view of an essential part showing a first example of the resistance welding structure which makes use of the member to be welded according to the first embodiment.
[Fig. 10] Fig. 10 is a cross-sectional view of an essential part showing a second example of the resistance welding structure which makes use of the member to be welded according to the first embodiment.
[Fig. 11] Fig. 11 is a cross-sectional view of an essential part showing a third example of the resistance welding structure which makes use of the member to be welded according to the first embodiment.
[Fig. 12] Fig. 12 is a cross-sectional view of an essential part showing a fourth example of the resistance welding structure which makes use of the member to be welded according to the first embodiment.
[Fig. 13] Fig. 13 is a cross-sectional view of an essential part showing a fifth example of the resistance welding structure which makes use of the member to be welded according to the first embodiment.
[Fig. 14] Fig. 14 is a cross-sectional view of an essential part showing one example of the resistance welding structure which makes use of the member to be welded according to the second embodiment.
[Fig. 15] Fig. 15 is a cross-sectional view of an essential part showing one example of the resistance welding structure which makes use of the member to be welded according to the third embodiment.
[Fig. 16] Fig. 16 is a cross sectional view of an essential part showing a first example of a parallel welding method.
[Fig. 17] Fig. 17 is a cross sectional view of an essential part showing a second example of the parallel welding method.
[Fig. 18] Fig. 18 is an explanatory view of a cylindrical battery to which the resistance welding structure, the resistance welding method and the member to be welded according to the present invention are applied.
[Fig. 19] Fig. 19 is an explanatory view of a vehicle AC generator to which the resistance welding structure, the resistance welding method and the member to be welded according to the present invention are applied.

### Description of Embodiments

Hereinafter, embodiments of the present invention are explained with respect to respective divided items consisting of the constitution of a member to be welded, a method of manufacturing the member to be welded, the resistance welding structure and a resistance welding method.

### [Constitution of member to be welded]

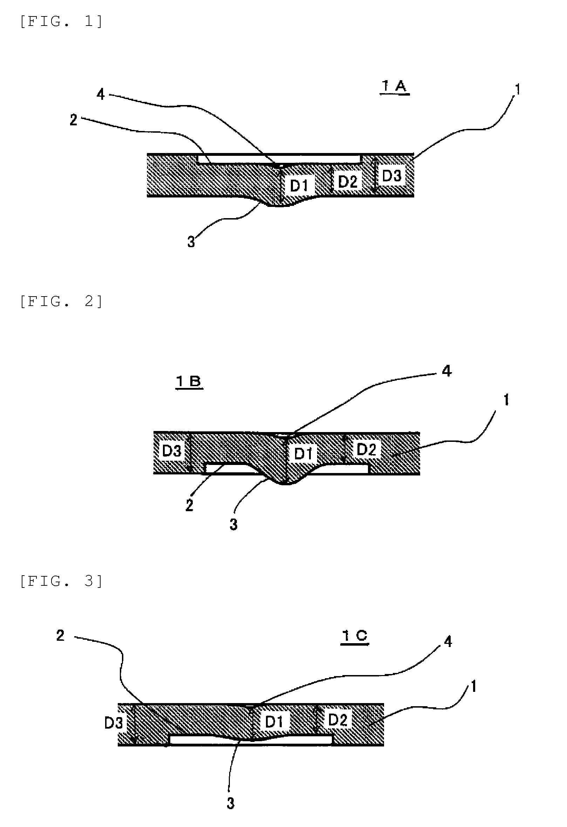

In a member to be welded 1A according to a first embodiment, as shown in Fig. 1, a recessed portion 2 is formed on one surface of a raw material 1 formed of a metal plate, a projection 3 is formed on a back surface of the recessed portion 2, and an indentation 4 is formed on a bottom surface of the recessed portion 2 at a position corresponding to a distal end of the projection 3. In a member to be welded 1B according to a second embodiment, as shown in Fig. 2, the recessed portion 2 is formed on one surface of the raw material 1 formed of a metal plate, a projection 3 is formed on a bottom surface of the recessed portion 2, and the indentation 4 is formed on a back surface of the recessed portion 2 at a position corresponding to a distal end of the projection 3. A distal end of the projection 3 projects to the outside of the recessed portion 2. In a member to be welded 1C according to a third embodiment, as shown in Fig. 3, in the same manner as the member to be welded 1B according to the second embodiment, the projection 3 is formed on a bottom surface of the recessed portion 2, and the indentation 4 is formed on a back surface of the recessed portion 2 at a position corresponding to a distal end of the projection 3. However, the distal end of the projection 3 is accommodated in the inside of the recessed portion 2. The indentation 4 is automatically formed along with the formation of the projection 3 as explained later in detail in a column "a method of manufacturing a member" to be welded.

As shown in Fig. 1 to Fig. 3, assuming a height of the projection 3 (a height from a bottom portion of the indentation 4 to the distal end of the projection) as D1, a plate thickness of the raw material 1 in the inside of the recessed portion 2 and around the periphery of the projection 3 as D2, and a plate thickness of the raw material 1 outside the recessed portion 2 as D3, the member to be welded 1A according to the first embodiment and the member to be welded 1B according to the second embodiment have the relationship of Dl>D2<D3, and the member to be welded 1C according to the third embodiment has the relationship of D1≈D2<D3.

By constituting the members to be welded 1A, 1B, 1C in this manner, a wall thickness of the projection 3 can be set equal to or larger than the plate thickness D2 of the raw material 1 in the inside of the recessed portion 2 and around the periphery of the projection 3. Accordingly, the projection 3 having high rigidity can be formed, and a resistance value at the time of energization can be made small so that the heat generation can be suppressed. Further, since the recessed portion 2 is formed around the projection 3, a heat affected zone can be suppressed to a narrow range by a shape effect of such a constitution. Accordingly, buckling of the projection 3 and the expansion of the heat affected zone can be prevented at the time of performing a welding operation so that welding quality of a welded part can be favorably improved.

### [Method of manufacturing member to be welded]

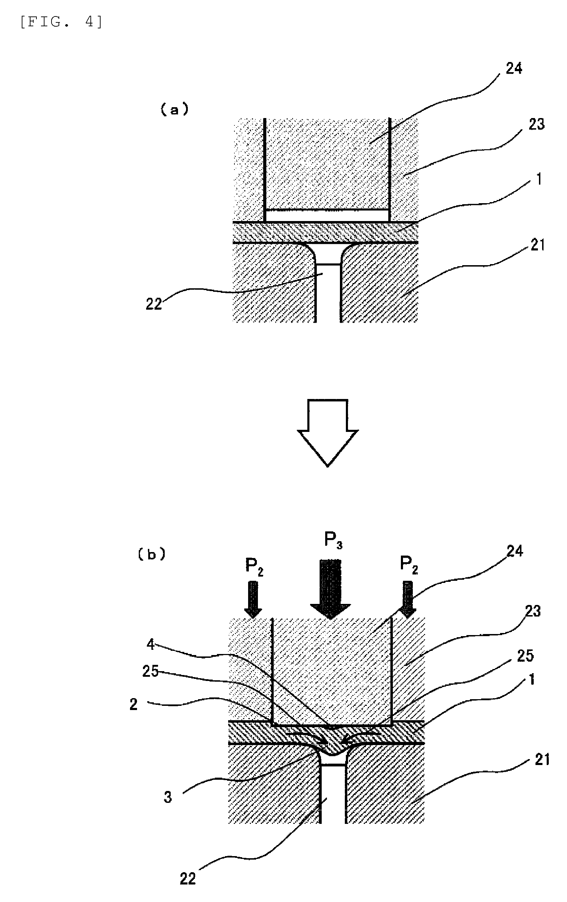

Firstly, the constitution of a press apparatus used for manufacturing the member to be welded 1A according to the first embodiment and a method of manufacturing the member to be welded 1A according to the first embodiment using the press apparatus are explained in conjunction with Fig. 4(a), (b). As shown in Fig. 4(a), (b), the press apparatus of this example is constituted of: a pair of molds 21, 23 which are arranged on a front surface side and a back surface side of the raw material 1 and fix the raw material; and a forming punch 24 which is vertically movably mounted on the mold 23 and locally applies a pressurizing force to the raw material 1. A forming hole 22 is formed in the mold 21 at a position corresponding to the forming punch 24.

In manufacturing the member to be welded 1A according to the first embodiment, as shown in Fig. 4(a), the raw material 1 is fixed by the pair of molds 21, 23 and, thereafter, as shown in Fig. 4(b), while applying a desired pressing force P₂ which does not generate the plastic deformation in the raw material 1 to the molds 21, 23, the forming punch 24 is driven so as to apply a pressurizing force P₃ for plastic deformation which is larger than the pressing force P₂ to one surface of the raw material 1. Accordingly, the recessed portion 2 corresponding to a shape of a distal end portion of the forming punch 24 is formed on a pressing force applied portion of the raw material 1. Further, a plastic flow 25 is generated in a portion of the raw material 1 by receiving the pressurizing force P₃, and the portion of the raw material 1 where the plastic flow 25 is generated flows into the inside of the forming hole 22 so that the projection 3 having a desired shape and a desired size is formed on a back surface side of the recessed portion 2. Further, the portion of the raw material 1 where the plastic flow 25 is generated flows into the inside of the forming hole 22 whereby the indentation 4 is formed on the bottom surface of the recessed portion 2 at a position corresponding to the distal end of the projection 3. The pressing force P₂ which is applied to the molds 21, 23 and the pressing force P₃ which is applied to the forming punch 24 are adjusted such that the size relationship among the respective parts becomes D1>D2<D3.

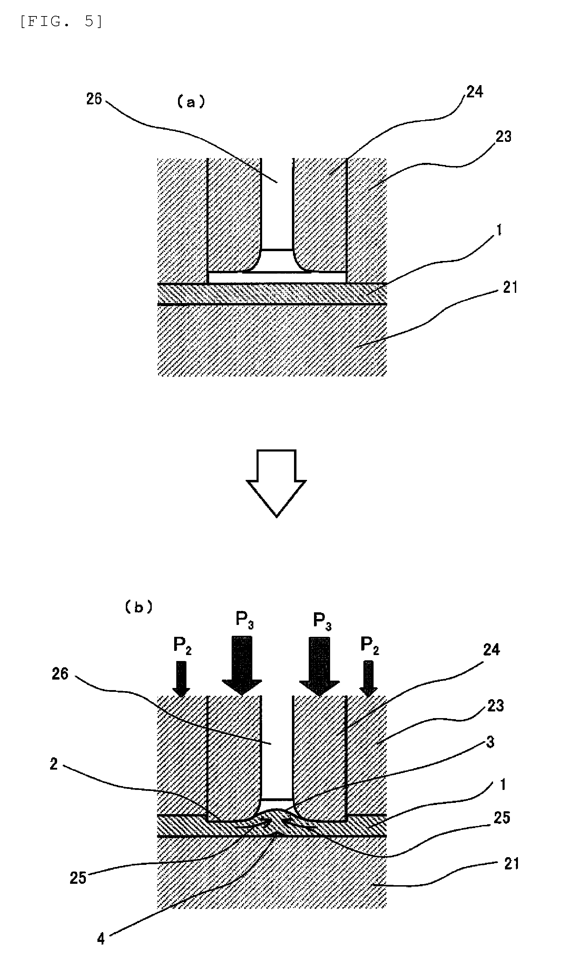

Next, the constitution of a press apparatus used for manufacturing the members to be welded 1B, 1C according to the second embodiment and the third embodiment and a method of manufacturing the members to be welded 1B, 1C according to the second embodiment and the third embodiment using the press apparatus are explained in conjunction with Fig. 5(a), (b). As shown in Fig. 5(a), (b), the press apparatus of this example is characterized in that the forming hole 22 is not formed in a mold 21 and a forming hole 26 is formed in the forming punch 24. Other parts are equal to the corresponding parts of the press apparatus shown in Fig. 4(a), (b) and hence, the explanation is omitted by giving the same symbol to the corresponding parts.

In manufacturing the members to be welded 1B, 1C according to the second embodiment and the third embodiment, as shown in Fig. 5(a), the raw material 1 is fixed by the pair of molds 21, 23 and, thereafter, as shown in Fig. 5(b), while applying a desired pressing force P₂ which does not generate the plastic deformation in the raw material 1 to the molds 21, 23, the forming punch 24 is driven so as to apply a pressurizing force P₃ for plastic deformation which is larger than the pressing force P₂ to one surface of the raw material 1. Accordingly, the recessed portion 2 corresponding to a shape of a distal end portion of the forming punch 24 is formed on a pressing force applied portion of the raw material 1. Further, the plastic flow 25 is generated in a portion of the raw material 1 by receiving the pressurizing force P₃, and the portion of the raw material 1 where the plastic flow 25 is generated flows into the inside of the forming hole 26 so that the projection 3 having a desired shape and a desired size is formed. Further, a portion of the raw material 1 where the plastic flow 25 is generated flows into the inside of the forming hole 26 whereby the indentation 4 is formed on the back surface of the recessed portion 2 at a position corresponding to the distal end of the projection 3. The pressing force P₂ which is applied to the molds 21, 23 and the pressing force P₃ which is applied to the forming punch 24 are adjusted such that the size relationship among the respective parts becomes D1>D2<D3 with respect to the member to be welded 1B according to the second embodiment and the size relationship among the respective parts becomes D1≈D2<D3 with respect to the member to be welded 1C according to the third embodiment.

By manufacturing the members to be welded 1A, 1B and 1C using the above-mentioned respective methods, the projection 3 having a desired shape and a desired size can be manufactured with precision by performing a press step one time and hence, the manufacturing efficiency of the members to be welded 1A, 1B and 1C can be enhanced.

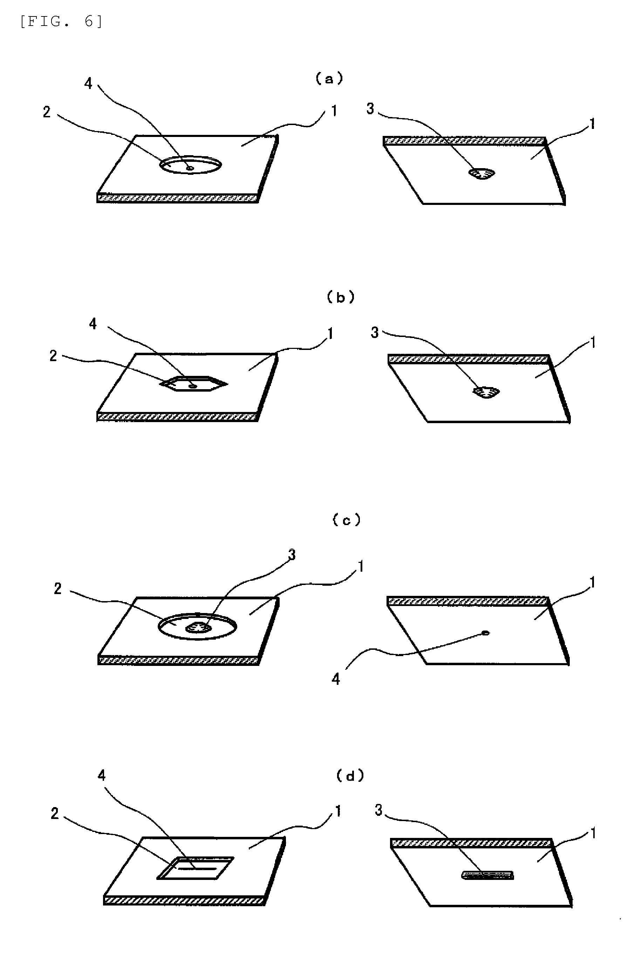

By changing a shape of the forming punch 24 and a shape of the forming hole 26, members to be welded having various recessed portions 2 and projections shown in Fig. 6(a) to (d) can be formed. Fig. 6 (a) shows an example where the circular recessed portion 2 is formed using the circular columnar forming punch 24 and the conical projection 3 is formed on a back surface side of the recessed portion 2. Fig. 6(b) shows an example where the hexagonal recessed portion 2 is formed using the hexagonal columnar forming punch 24 and the conical projection 3 is formed on a back surface side of the recessed portion 2. Fig. 6(c) shows an example where the circular recessed portion 2 is formed using the circular columnar forming punch 24 and the conical projection 3 is formed on a bottom surface of the recessed portion 2. Fig. 6(d) shows an example where the angular recessed portion 2 is formed using the angular columnar forming punch 24 and the linear projection 3 is formed on a back surface side of the recessed portion 2.

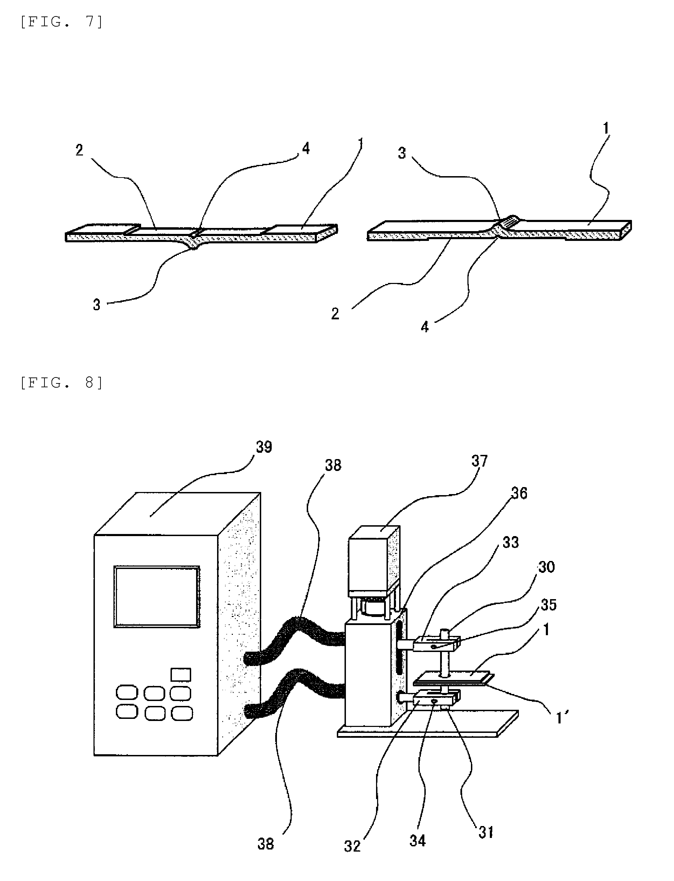

Further, by suitably applying cutting working to the members to be welded shown in Fig. 6(d), it is also possible to form a ribbon-shaped member to be welded shown in Fig. 7. Although the press apparatuses shown in Fig. 4 and Fig. 5 are respectively provided with the press mold 23, the press mold 23 is not an indispensable constitutional member, and a desired member to be welded can be formed using a press apparatus which is not provided with the press mold 23.

### [Resistance welding structure and resistance welding method]

Firstly, the constitution of a resistance welder used for carrying out the resistance welding structure and the resistance welding method according to the present invention is explained in conjunction with Fig. 8. As shown in Fig. 8, the resistance welder according to this example includes: a welding power source 39, electrode holders 32, 33 which are connected to the welding power source 39 via secondary conductors 38; a welding head 36 which holds the electrode holders 32, 33; a fixed electrode 31 which is mounted on the electrode holder 32 by a clamp bolt 34; a movable electrode 30 which is mounted on the electrode holder 33 by a clamp bolt 35; and a pneumatic cylinder 37 which is mounted on the welding head 36 and vertically moves the electrode holder 33 and the movable holder 30. Joining of members to be welded 1, 1' can be performed in such a manner that the members to be welded 1, 1' are inserted between the fixed electrode 31 and the movable electrode 30 in a state where the movable electrode 30 is retracted to an upper side and, thereafter, the members to be welded 1, 1' are sandwiched by a distal end portion of the fixed electrode 31 and a distal end portion of the movable electrode 30 by driving the pneumatic cylinder 37, and at a stage where a pressurizing force applied to the members to be welded 1, 1' reaches a predetermined value, a welding current can be supplied to the respective electrodes 30, 31 via the secondary conductors 38 from the welding power source 39.

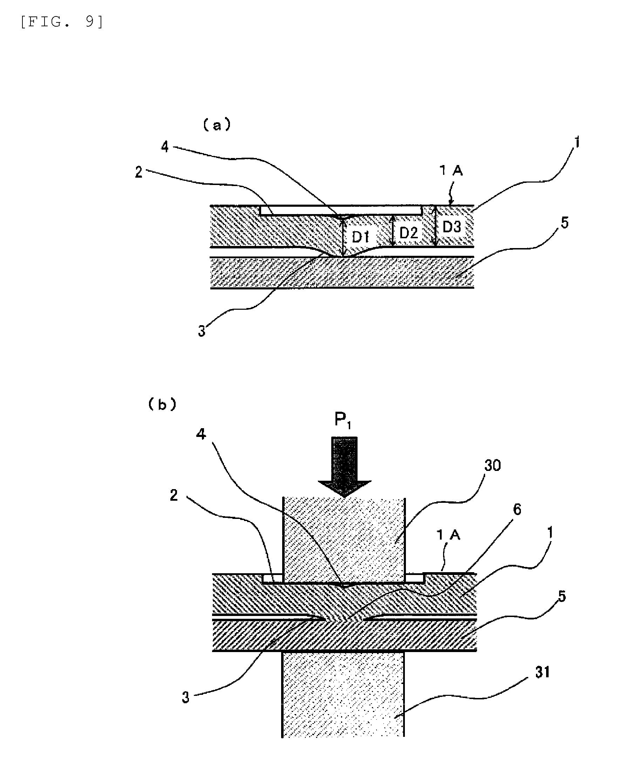

Fig. 9 to Fig. 13 show the resistance welding structure and the resistance welding method when the member to be welded 1A according to the first embodiment is used. Fig. 9(a), (b) show the resistance welding structure and the resistance welding method relating to the joining between the member to be welded 1A of the first embodiment and a flat-plate-shaped member to be welded 5 on which a projection is not formed. In joining these respective members to be welded 1A, 5 to each other, firstly, as shown in Fig. 9(a), one surface of the member to be welded 5 is made to abut on the projection 3 formed on the member to be welded 1A, and the member to be welded 5 is fixed. Next, as shown in Fig. 9(b), the movable electrode 30 of the resistance welder shown in Fig. 8 is made to abut on a bottom surface of a recessed portion 2 formed on the member to be welded 1A, and the fixed electrode 31 is made to abut on a back surface of the member to be welded 5 at a position corresponding to the movable electrode 30, and in a state where a pressurizing force P₁ is applied between the members to be welded 1A, 5, a welding current supplied from the welding power source 39 is applied between the respective electrodes 30, 31. With the supply of the welding current, a contact surface between the projection 3 formed on the member to be welded 1A and the other member to be welded 5 which is formed in a flat plate shape is heated by heat generation due to electric resistance generated at the time of energization so that, as shown in Fig. 9(b), a joining portion 6 is formed on the contact surface by solid phase joining or melt joining. Accordingly, the members to be welded 1A, 5 are integrally joined to each other.

According to this resistance welding method, although the pressurizing force P₁ is applied to the projection 3 at the time of joining, the indentation 4 which is formed on a surface of the member to be welded 1A opposite to the projection 3 of the member to be welded 1A to which the resistance welding method of this example is applied is small so that a cavity formed between the movable electrode 30 and the member to be welded 1A becomes small whereby the rigidity of the projection 3 can be ensured and the deformation of the member to be welded 1A by the pressurizing force P₁ can be made small. Further, it is possible to ensure a sufficient contact area between the movable electrode 30 and the member to be welded 1A and hence, density of a welding current applied between the movable electrode 30 and the member to be welded 1A can be lowered whereby damage on the member to be welded 1A can be prevented thus prolonging a lifetime of the electrode 30. Further, the recessed portion 2 is formed on the member to be welded 1A and hence, a distance from the movable electrode 30 to a distal end of the projection 3 is short so that the heat generation of the member to be welded 1A per se can be lowered. Further, since the plate thickness D2 of the raw material 1 in the inside of the recessed portion 2 is set thinner than the plate thickness D3 of the raw material 1 outside the recessed portion 2, heat can be easily concentrated on the projection 3 whereby it is possible to make only the joining portion 6 efficiently generate heat thus realizing the stable and high-quality joining with small influence of heat.

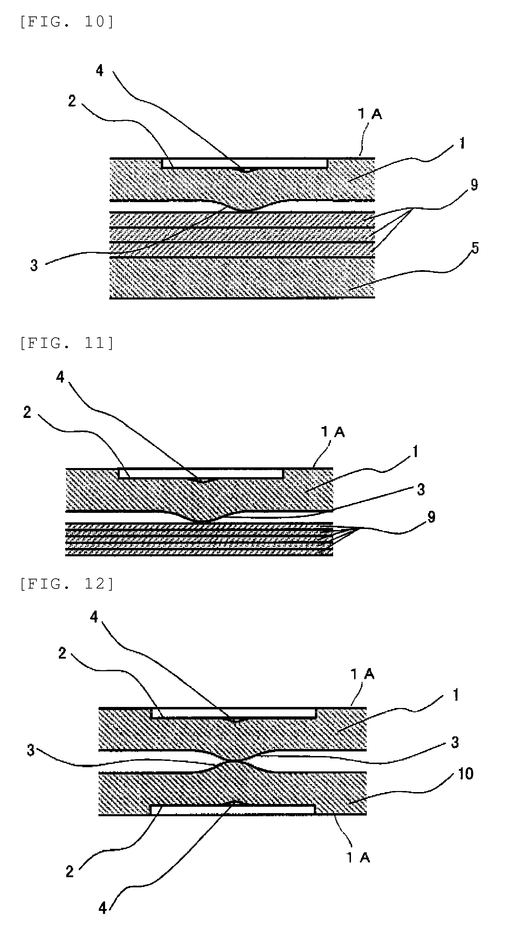

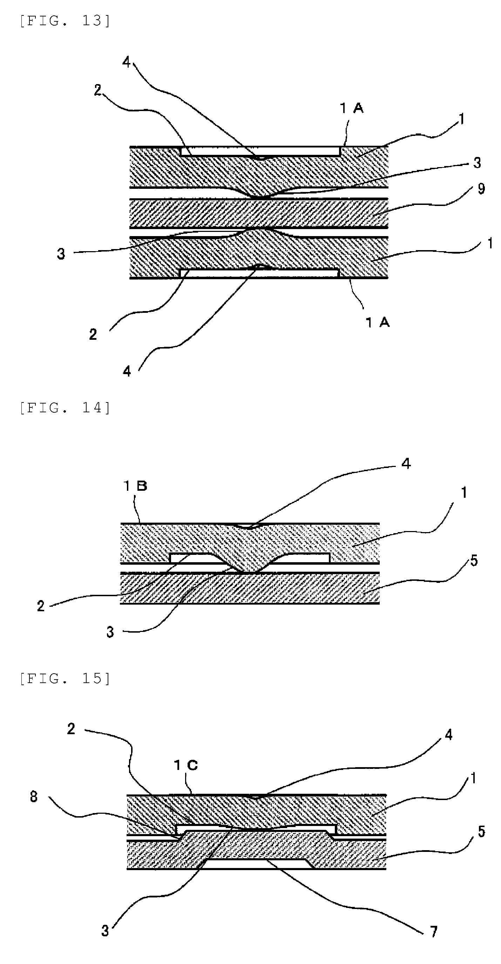

In the example shown in Fig. 9(a), (b), the member to be welded 1A according to the first embodiment is joined to another flat-plate-shaped member to be welded 5 on which the projection 3 is not formed. However, the gist of the present invention is not limited to such structure, and is applicable to various other resistance welding structures. For example, as shown in Fig. 10, a plurality of flat-plate-shaped members to be welded 9 having a small plate thickness are sandwiched between the member to be welded 1A according to the first embodiment and one flat-plate-shaped member to be welded 5 having a large plate thickness, and these members are integrally joined to each other. The number of the flat-plate-shaped members to be welded 9 having a small plate thickness may be one. Further, as shown in Fig. 11, the member to be welded 1A according to the first embodiment and a plurality of flat-plate-shaped members to be welded 9 having a small plate thickness may be integrally joined to each other. Further, as shown in Fig. 12, the two members to be welded 1A according to the first embodiment may be integrally joined to each other by making the projections 3 abut on each other. Still further, as shown in Fig. 13, in a state where the projections 3 are directed inwardly, the two members to be welded 1A according to the first embodiment and the flat-plate-shaped member to be welded 9 which is sandwiched between these two members to be welded 1A may be integrally joined to each other.

Fig. 14 shows the resistance welding structure when the member to be welded 1B according to the second embodiment is used. In the example shown in Fig. 14, the member to be welded 1B according to the second embodiment and the flat-plate-shaped member to be welded 5 on which a projection is not formed are integrally joined to each other via the projection 3. Although not shown in the drawing, the constitution and the number of other members to be welded which are joined to the member to be welded 1B according to the second embodiment are not limited, and various resistance welding structures may be constituted by combining the member to be welded 1B according to the second embodiment with other desired members to be welded (see Fig. 10 to Fig. 13). Further, as a resistance welder, the resistance welder shown in Fig. 8 can be used, and the member to be welded 1B according to the second embodiment can be joined using a resistance welding method substantially equal to the resistance welding method which uses the member to be welded 1A according to the first embodiment.

Fig. 15 shows the resistance welding structure when the member to be welded 1C according to the third embodiment is used. In the example shown in Fig. 15, the member to be welded 1C according to the third embodiment and another member to be welded 5 are integrally joined to each other via the projection 3. In the resistance welding structure of this example, as another member to be welded 5, as shown in Fig. 15, a member to be welded on which a curved portion 7 which is insertable in the inside of the recessed portion 2 formed in the member to be welded 1C of the third embodiment is formed is used. Joining of the respective members is performed by making the projection 3 formed on the member to be welded 1C according to the third embodiment abut on an outer surface 8 of the curved portion 7. As a resistance welder, the resistance welder shown in Fig. 8 can be used, and the member to be welded 1C according to the third embodiment can be joined using a resistance welding method substantially equal to the resistance welding method which uses the member to be welded 1A according to the first embodiment.

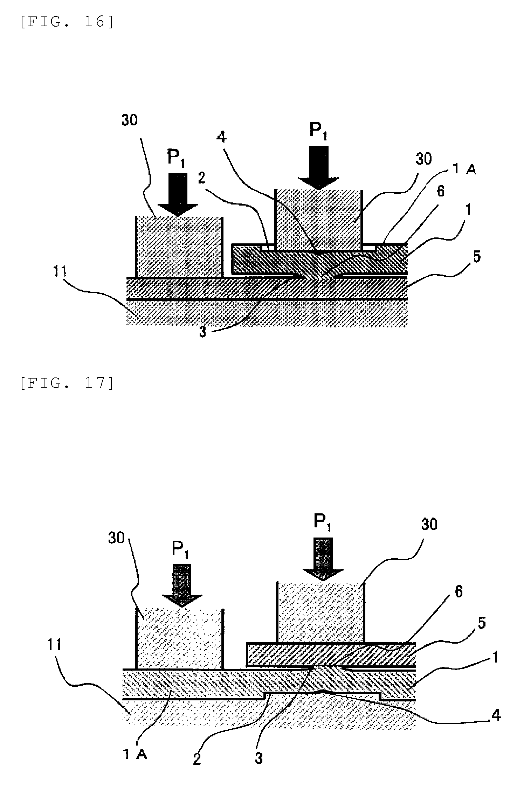

In the examples shown in Fig. 9 to Fig. 15, the explanation has been made by taking the case where, using the resistance welder shown in Fig. 8, a pressurizing force is applied to the predetermined member to be welded by sandwiching the member to be welded between the movable electrode 30 and the fixed electrode 31, and the resistance welding is performed as an example. However, the gist of the present invention is not limited to such a case, and the desired resistance welding structure can be also acquired by so-called parallel welding where the movable electrode 30 and the fixed electrode 31 are arranged parallel to each other. Fig. 16 shows one example, wherein the member to be welded 5 formed into a flat plate shape is placed on a support member 11, and the projection 3 of the member to be welded 1A according to the first embodiment is made to abut on an upper surface of the member to be welded 5. In such a state, the movable electrodes 30 are made to abut on the upper surface of the member to be welded 5 and a bottom surface of the recessed portion 2 formed on the member to be welded 1A according to the first embodiment and the pressurizing force P₁ is applied to the movable electrodes 30, and a welding current is supplied between these two movable electrodes 30. Due to such resistance welding structure, the joining portion 6 formed by solid phase joining or melting joining is formed on a contact surface between the members to be welded 1A, 5. Advantageous effects substantially equal to the previously mentioned advantageous effects can be also acquired by the parallel welding method.

Fig. 17 shows the second example. Contrary to the example shown in Fig. 16, the member to be welded 1A according to the first embodiment is placed on the support member 11, and the member to be welded 5 formed into a flat plate shape is made to abut on the projection 3 formed on the member to be welded 1A according to the first embodiment. In such a state, the movable electrodes 30 are respectively made to abut on an upper surface of the member to be welded 1A according to the first embodiment and an upper surface of the member to be welded 5 and the pressurizing force P₁ is applied to the movable electrodes 30, and a welding current is supplied between these two movable electrodes 30. Due to such resistance welding structure, the joining portion 6 formed by solid phase joining or melting joining is formed on a contact surface between the members to be welded 1A, 5.

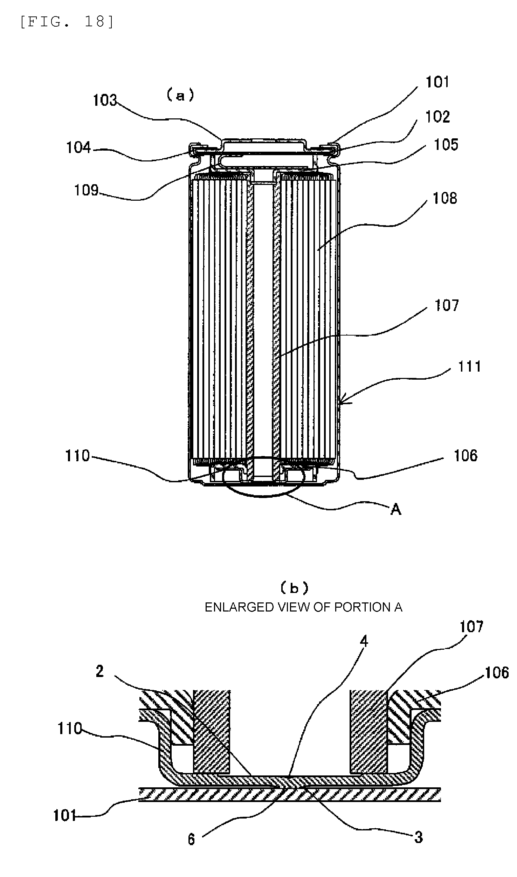

Hereinafter, a cylindrical battery to which the resistance welding structure, the resistance welding method and the member to be welded according to the present invention are applied is explained. The cylindrical battery of this example is a secondary battery, and as shown in Fig. 18(a), (b), in a secondary battery 111, a positive-pole collector part 105 and a negative-pole collector part 106 are mounted on a group of electrodes 108 wound around a resin-made core 107, and these parts are housed in the inside of a battery case 101. Out of the group of electrodes 108, the negative-pole electrodes are connected to the negative-pole collector part 106 by welding or the like, and are electrically connected to the battery case 101 via a negative-pole lead 110.

The resistance welding structure, the resistance welding method and the member to be welded according to the present invention are used for joining the battery case 101 and the negative-pole lead 110. That is, the recessed portion 2 and the projection 3 are formed on the negative-pole lead 110, the group of electrodes 108, the positive-pole collector part 105 and the negative-pole collector part 106 are housed in the inside of the battery case 101 and, thereafter, a resistance welding electrode is made to pass through the center of the core 107 and is brought into contact with the recessed portion 2 formed on the negative-pole lead 110, and a resistance welding electrode is brought into contact with an outer side of a bottom surface of the battery case 101 so that the negative-pole lead 110 and the battery case 101 are sandwiched by the resistance welding electrodes, and a pressure is applied to the resistance welding electrodes and, thereafter, a welding current of a resistance welder is applied between the resistance welding electrodes so that a bottom portion of the battery case 101 and the projection 3 of the negative-pole lead 110 are welded to each other by the joining portion 6. Thereafter, the inside of the battery case 101 is filled with an electrolytic solution. An electrically-conductive upper lid portion which is configured to seal an opening portion of the battery case 101 is mounted on the positive-pole collector part 105, and the upper lid portion is constituted of an upper lid 103 and an upper lid case 104. One end of a positive pole lead 109 is welded to the upper lid case 104, and the other end of the positive pole lead 109 is welded to the positive-pole collector part 105 so that the upper lid portion and positive poles of the group of electrodes 108 are electrically connected with each other. A gasket 102 is provided between the battery case 101 and the upper lid case 104. The opening portion of the battery case 101 is sealed by the gasket 102, and the battery case 101 and the upper lid case 104 are electrically insulated from each other by the gasket 102. The secondary battery 111 is constituted as described above.

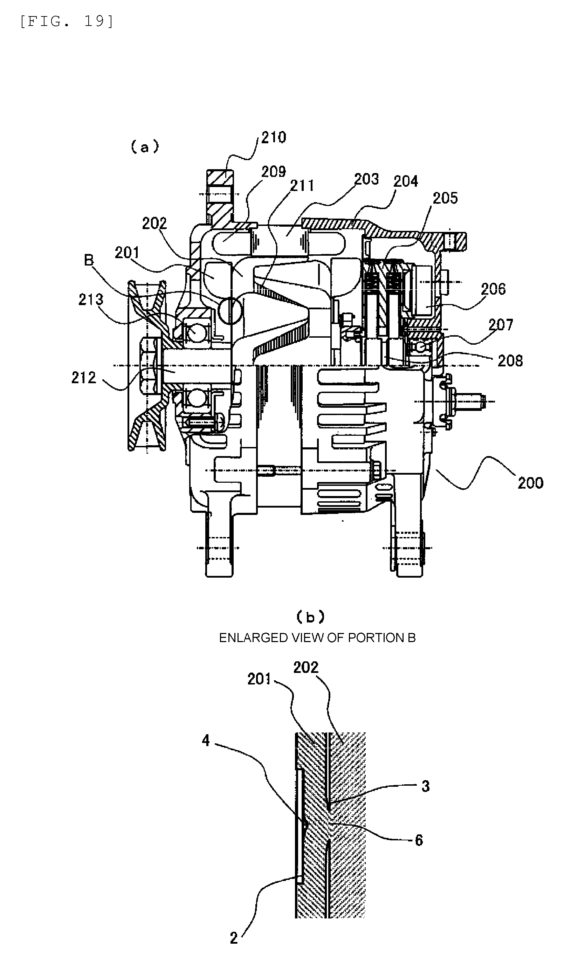

Next, a vehicle AC generator to which the resistance welding structure, the resistance welding method and the member to be welded according to the present invention are applied is explained. As shown in Fig. 19(a), (b), in a vehicle AC generator 200, a stator coil 209 is mounted on a stator core 203 on a fixed side, and electric power is generated when a pole core 202 having a magnetic field coil 211 on a rotary side is rotated. Since the vehicle AC generator 200 generates heat at the time of power generation, a centrifugal fan 201 for cooling is joined to the pole core 202. The resistance welding structure, the resistance welding method and the member to be welded according to the present invention are utilized for joining the centrifugal fan 201 for cooling and the pole core 202. That is, recessed portions 2 and projections 3 are formed on the centrifugal fan 201 for cooling, the projections 3 formed on the centrifugal fan 201 for cooling are brought into contact with the pole core 202, resistance welding electrodes not shown in the drawing are brought into contact with a bottom surface of the recessed portion 2 formed on the centrifugal fan 201 for cooling and the pole core 202, and a welding current is supplied to the resistance welding electrodes so that contact surfaces of the projection 3 and a contact surface of the pole core 202 are joined to each other by electric resistance heat at the time of energization.

The plurality of projections 3 are formed on the centrifugal fan 201 for cooling around the center of rotation at equal intervals. In this example, the number of projections 3 is set to 6. The joining of the centrifugal fan 201 for cooling and the pole core 202 is performed simultaneously with respect to the plurality of projections 3. Due to such an operation, operation efficiency is enhanced, and joining quality of the respective joining portions 6 is made uniform.

### Reference Signs List

1A, 1B, 1C: member to be welded, 2: recessed portion, 3: projection, 4: indentation, 5: member to be welded, 6: joining portion, 7: curved portion, 8: outer surface of curved portion, 9: member to be welded, 11: support member, 21: forming mold, 22: forming hole, 23: press mold, 24: forming punch, 25: plastic flow, 26: forming hole, 30: movable electrode, 31: fixed electrode, 32: electrode holder, 33: electrode holder, 34: clamp bolt, 35: clamp bolt, 36: welding head, 37: pneumatic cylinder, 38: secondary conductor, 39: welding power source, 101: battery case, 102: gasket, 103: upper lid, 104: upper lid case, 105: positive-pole collector part, 106: negative-pole collector part, 107: core, 108: group of electrodes, 109: positive-pole lead, 110: negative-pole lead, 200: vehicle AC generator, 201: centrifugal fan for cooling, 202: pole core, 203: stator core, 204: end frame, 205: brush holder, 206: regulator, 207: bearing, 208: slip ring, 209: stator coil, 210: end frame, 211: magnetic field coil, 212: shaft, 213: bearing

## Claims

1. A member to be welded where one or a plurality of projections are formed on a raw material formed of a metal plate, wherein
a recessed portion is formed on one surface of the raw material, the projection is formed on a bottom surface or a back surface of the recessed portion, and assuming a plate thickness of the raw material in the inside of the recessed portion and around the periphery of the projection as D2 and a plate thickness of the raw material outside the recessed portion as D3, the plate thicknesses of the respective portions have the relationship of D2<D3.

2. The member to be welded according to claim 1, wherein an indentation is formed on a back surface of the projection at a position corresponding to a distal end of the projection, and assuming a height from a bottom portion of the indentation to a distal end of the projection as D1, the relationship between the height D1 and the plate thickness D2 of the raw material in the inside of the recessed portion and around the periphery of the projection is set to D1>D2.

3. The member to be welded according to any one of claim 1 and claim 2, wherein the projection is formed on a bottom surface of the recessed portion and a distal end of the projection is arranged in the inside of the recessed portion.

4. A method of manufacturing a member to be welded, wherein using a press apparatus which includes; a pair of molds which are arranged on a front surface side and a back surface side of a raw material formed of a metal plate and fix the raw material thereto; a forming punch which locally applies a pressurizing force to the raw material; and a forming hole through which a portion of the raw material which generates a plastic flow by receiving the pressurizing force applied by the forming punch is made to flow, the raw material is fixed by the pair of molds and, thereafter, a predetermined pressurizing force is applied to one surface of the raw material by driving the forming punch thus forming a recessed portion corresponding to a shape of a distal end portion of the forming punch on a pressurizing force applied portion of the raw material, a portion of the raw material which generates the plastic flow by receiving the pressurizing force is made to flow through the forming hole whereby a projection having a predetermined shape and a predetermined size is formed, and assuming a plate thickness of the raw material in the inside of the recessed portion and around the periphery of the projection as D2 and a plate sickness of the raw material outside the recessed portion as D3, the plate thicknesses of the respective portions have the relationship of D2<D3.

5. The method of manufacturing a member to be welded according to claim 4, wherein the projection is formed on a back surface of the recessed portion using a press apparatus where the forming hole is formed in a mold arranged to face the forming punch in an opposed manner.

6. The method of manufacturing a member to be welded according to claim 4, wherein the projection is formed on a bottom surface of the recessed portion using a press apparatus where the forming hole is formed in the forming punch.

7. A resistance welding structure in which a plurality of members to be welded which include at least one member to be welded on which a projection is formed are formed into an integral body by projection welding,
wherein the member to be welded on which the projection is formed is a member to be welded where one or a plurality of projections are formed on a raw material formed of a metal plate, a recessed portion is formed on one surface of the raw material, the projection is formed on a bottom surface or a back surface of the recessed portion, assuming a plate thickness of the raw material in the inside of the recessed portion and around the periphery of the projection as D2 and a plate thickness of the raw material outside the recessed portion as D3, the plate thicknesses of the respective portions have the relationship of D2<D3, and the member to be welded on which the projection is formed and the other member to be welded which is joined to the member to be welded on which the projection is formed are joined to each other via the projection.

8. The resistance welding structure according to claim 7, wherein a member to be welded on which the projection is not formed is used as the another member to be welded, and the projection is joined to one surface of the another member to be welded on which the projection is not formed.

9. The resistance welding structure according to claim 7, wherein the member to be welded on which the projection is formed is used as the another member to be welded, and the projections which are formed on the respective members to be welded are joined to each other.

10. The resistance welding structure according to claim 7, wherein a member to be welded where the projection is formed on a bottom surface of the recessed portion and a distal end of the projection is arranged in the inside of the recessed portion is used as the member to be welded on which the projection is formed, a member to be welded on which a curved portion which is insertable into the inside of the recessed portion is formed is used as the another member to be welded, and the projection is joined to an outer surface of the curved portion in the recessed portion.

11. The resistance welding structure according to any one of claims 7 to 10, wherein the resistance welding structure includes a plurality of members to be welded on each of which the projection is not formed, and the member to be welded on which the projection is formed and the member to be welded on which the projection is not formed and which is brought into contact with the member to be welded on which the projection is formed are joined to each other via the projection, and the members to be welded on each of which the projection is not formed are joined to each other in a spotted manner at a position facing to the projection.

12. The resistance welding structure according to any one of claims 7 to 10, wherein the plurality of members to be welded are a battery case and a negative pole lead which constitute a battery.

13. The resistance welding structure according to any one of claims 7 to 10, wherein the plurality of members to be welded are a pole core and a centrifugal fan for cooling which constitute a dynamo-electric machine.

14. A resistance welding method where a plurality of members to be welded which include at least one member to be welded on which a projection is formed are formed into an integral body by projection welding, wherein
as the member to be welded on which the projection is formed, a member to be welded where a recessed portion is formed on one surface of a raw material which is formed of a metal plate, the projection is formed on a bottom surface or a back surface of the recessed portion, and assuming a plate thickness of the raw material in the inside of the recessed portion and around the periphery of the projection as D2 and a plate thickness of the raw material outside the recessed portion as D3, the plate thicknesses of the respective portions have the relationship of D2<D3 is used, and
the plurality of members to be welded are made to overlap with each other with the projection arranged inside and, thereafter, electricity is supplied between the plurality of members to be welded via the projection, and a pressurizing force is applied to the projection.

15. The resistance welding method according to claim 14, wherein a fixed electrode and a movable electrode which are arranged opposite to each other are respectively brought into pressure contact with both front and back surfaces of a laminated body constituted by overlapping the plurality of members to be welded to each other, electricity is supplied between the both electrodes, and a pressurizing force is applied to the projection by driving the movable electrode.

16. The resistance welding method according to claim 14, wherein a fixed electrode and a movable electrode which are arranged parallel to each other are brought into pressure contact with one surface of a laminated body constituted by overlapping the plurality of members to be welded to each other, electricity is supplied between the both electrodes, and a pressurizing force is applied to the projection by driving the movable electrode.
